# EUROPEAN PATENT SPECIFICATION

(11) **EP 3 552 133 B1**
(45) Date of publication and mention of the grant of the patent: **03.04.2024**
(21) Application number: 17822024.0
(22) Date of filing: 05.12.2017
(51) Int. Cl.: G06F 21/32, H04L 9/32, G06F 21/45, G06Q 50/26, G06Q 40/02

(54) **SYSTEM AND METHOD FOR ONLINE DIGITAL UNIVOCAL IDENTIFICATION**
SYSTEM UND VERFAHREN FÜR DIGITALE EINDEUTIGE ONLINE-IDENTIFIZIERUNG
SYSTÈME ET PROCÉDÉ D'IDENTIFICATION UNIVOQUE NUMÉRIQUE EN LIGNE

(30) Priority: 06.12.2016 IT 201600124019
(43) Date of publication of application: 16.10.2019
(73) Proprietor: Social Nation S.R.L., 20123 Milano (IT)
(72) Inventor: BRACHETTI, Livio, 20146 Milano (IT)
(74) Representative: Penza, Giancarlo
(86) International application number: PCT/IB2017/057633
(87) International publication number: WO 2018/104848

(56) References cited:
- US-A1- 2012 106 805
- US-A1- 2013 219 480
- US-A1- 2014 279 516
- US-A1- 2016 241 531

## Description

### FIELD OF APPLICATION

The object of the present invention is a system for online digital univocal identification of a subject.

The object of the present invention is a method for online digital univocal identification of a subject.

In particular, the object of the present invention is a system/method for online digital univocal identification of a subject realized upon prior access to a public access network such as the Internet.

### PRIOR ART

There are also known systems for online identification of a subject that are based on tokens, for example for home banking systems. These systems supply access data to a web platform in which the identification data for a subject who has been visually recognized - such data already being present on the platform of a bank - are cross-checked with a subject's identification data present in a token hand-delivered to the subject. According to this known technique, data correspondence enables correct identification of the subject. This correspondence is actually guaranteed only at the moment in which the token is given to the user. In other words, this technique of the prior art necessarily requires the user to go to the bank in person in order to be identified "de visu" and to receive the token. With specific reference to the Italian state, an alternative was established by the "Consolidated Law on Banking" (Legislative Decree no. 385 of 1 September 1993), the consolidated banking and credit laws, which authorizes an online bank to open an online bank account for a subject by means of a bank transfer directly received from a bank that had previously recognized the subject "de visu", for the purposes of opening a bank account, thereby inheriting therefrom the recognition previously carried out. Only the bank that has performed the recognition process can authorize another bank (with a bank transfer) to open a new bank account for the same subject who has already been recognized.

In Italy, there are other, more advanced identification systems of the prior art such as the SPID system (Public Digital Identity System), which makes it possible to access all online Public Administration services in Italy with a single Digital Identity (username and password) that can be used from computers, tablets and smartphones.

Intrinsically the SPID is not very user-friendly nor fast. In fact, it is a recognition system that necessarily requires the intervention of an operator and about 10 minutes for execution of the necessary digital identity procedures.

Moreover, the SPID system is intrinsically unsafe as it does not cross-check the data "declared by the person" and the document used for identification with any other secure source of data, as would instead be required by the Decree by the Prime Minister of the Council of Ministers (DPCM) which requires verification subsequent to registration.

In practice, the SPID system permits a user to register up to 15 accounts, without ensuring the univocity requirement to any degree, a requirement which is necessary for correct identification of a subject.

Furthermore, the SPID system is based solely on digital identities, without providing possibilities for using services relating to the identity generated. For example, there is no possibility of associating a payment with the user who has loaded data for his/her own identification.

Moreover, the service provided for online identification has high costs, presently of about 18 euro per year.

US2016/241531, US 2012/106805 and US 2014/279516 disclose standard identity identification systems.

The aim of the present invention is to realize a system and a method for online digital univocal identification that is effective and secure.

Another aim of the present invention is to realize a system and a method for online digital univocal identification that is simple to use.

Another aim of the present invention is to realize a system and a method for online digital univocal identification that can be easily used by online services that require guaranteed univocal identification.

### SUMMARY OF THE INVENTION

The latter aims and others as well are also achieved by a computer implemented method for online digital univocal identification, according to that which is disclosed in claims 1 to 9.

These aims and others as well are achieved by a system for online digital univocal identification according to that which is disclosed in claims 10 to 11.

The invention also comprises a computer program that implements one or more steps of the method, according to claim 12.

The online digital univocal identification of a subject is realized upon prior access to a public access network, such as the Internet, that is, in an online connection state.

In a first aspect, the invention discloses a method for online univocal identification of a subject, comprising the steps of:
- creating a profile for the subject;
- activating a procedure for online univocal identification as a function of the created profile, said procedure comprising the substep of identifying an electronic device equipped with a video camera as a function of the created profile;
- executing at least the following steps, via said procedure for online univocal identification:
   transmitting to the electronic device at least two requests for at least two different multimedia contents representing the subject;
   receiving the at least two multimedia contents in real time, as a function of the at least two requests, wherein the at least two multimedia contents have been realized by the video camera;
   performing first, second and third verifications of correspondence in at least one multimedia content among the multimedia contents received in real time representing the subject;
   performing at least one verification of univocity on the received multimedia contents;
   performing a fourth verification of correspondence on a fourth content comprising verified identification data for the subject;
- in the case that the verifications are satisfactory, generating univocal identification data for the univocally identified subject.

Preferably, the method comprises a step of performing a first verification of univocity on said multimedia contents, which carries out a univocity comparison between the detected multimedia contents of the subject and the multimedia content data of already univocally identified subjects. Preferably, in the case of a positive outcome of the first verification of univocity, the method comprises that the step of sending to the electronic device a fourth request for a fourth content is also performed, the fourth content comprising verified identification data for the subject.

Preferably, the fourth verification of correspondence comprises:
receiving the first verified identification data for the subject from a processing module configured to scan a personal payment card photograph of the subject and to recognize part of the scan representing the first verified identification data for the subject.

Preferably, the method comprises one of the steps of:
receiving the second verified identification data for the subject from the processing module, wherein said second verified identification data for the subject are obtained starting from a photograph of an identification document of the subject which has been indicated as the third multimedia content
   or
receiving the third verified identification data for the subject from a payment unit, wherein the third verified identification data for the subject are obtained starting from a payment via bank transfer or another form of payment that requires identification of the same subject.

Preferably, the method comprises the step of verifying correspondence between the first verified identification data and either the second verified identification data or the third verified identification data.

In particular, the method is implemented by means of a computer.

In a second aspect, the invention discloses a method for providing an online service, comprising the steps of:
- providing an online service that can be accessed by an identified subject;
- receiving a request for access to the service from the subject;
- requesting univocal identification from the subject as a function of the request for access;
- receiving an authorization from the subject for the request;
- forwarding the request to a univocally identified identity database, the univocally identified identities being obtained by means of the method of the first aspect;
- receiving univocal identification data of the subject from the univocally identified identity database;
- one or more of the following:
   granting the subject access to the online service as a subject univocally identified by the univocal identification data;
   activating the service as a function of the univocal identification data;
   paying for the service or product as a function of the univocal identification data by means of payment methods used by the generic subject and contained in a memory of the database, the payment being executable with just one click.

In particular, the method is implemented by means of a computer.

In a third aspect, the invention discloses a system for online univocal identification of a subject, comprising:
an online identification platform comprising:
   - a receiving module configured to receive identity data for the subject, wherein the identity data comprise at the least personal data and a mobile phone number of the subject;
   - a first calculation module configured to create a profile for the subject by means of the combination of the subject's personal data with the mobile phone number stored in the memory;
   - a first processing module configured to identify an electronic device, equipped with a video camera, as a function of the profile created;
   - a module configured to send to the electronic device at least two requests for at least two different multimedia contents representing the subject S;
   - a receiving module configured to receive in real time at least two required multimedia contents as a function of the two requested, wherein the at least two multimedia contents have been realized by means of said video camera;
   - a first and a second verification module configured to verify correspondences in at least one multimedia content among the multimedia contents received in real time representing the subject;
at least one univocity module configured to perform at least one verification of univocity on said multimedia contents;
   - a third verification module configured to perform a fourth verification of correspondence on a fourth content comprising verified identification data for the subject;
   - an identification module configured to generate univocal identification data for the univocally identified subject.

Preferably, the identification platform further comprises a first univocity module configured to perform a first verification of univocity on said multimedia contents, carrying out a univocity comparison between said detected multimedia contents of the subject and the multimedia content data of already univocally identified subjects.

Preferably, the identification platform comprises a second univocity module, which is configured to perform, in the case of a positive outcome of the first verification of univocity, also the step of sending to said electronic device a fourth request for a fourth content comprising verified identification data for the subject.

Preferably, the identification platform further comprises a processing module configured to scan a personal payment card photograph of the subject and to recognize part of said scan representing first verified identification data for the subject received in said fourth verification of correspondence.

Preferably, said verification module is further configured to receive the second verified identification data for the subject from the processing module, wherein said second verified identification data for the subject are obtained starting from a photograph of an identification document of the subject which has been indicated as the third multimedia content,
or
to receive the third verified identification data for the subject from a payment unit, wherein said third verified identification data for the subject are obtained starting from a payment via bank transfer or another form of payment that requires identification of the same subject.

Preferably, said verification module is further configured to verify correspondence between the first verified identification data and either the second verified identification data or the third verified identification data.

In a fourth aspect, the invention discloses a computer program, which, when running on a computer, implements at least one or more steps of one or more of the methods of the first and second aspects of the invention.

In general, the invention provides for guaranteeing the certainty of an online identification of a subject at various levels.

In particular, the invention achieves the following technical effects:
- univocity of identification;
- efficient and secure online identification of the subject without any possibility of fraud;
- simply achieved online univocal identification;
- online univocal identification without the need for a specifically designated operator;
- online univocal identification that is flexible in use by the user;
- fast online univocal identification (about 2 minutes);
- identity verification carried out also during a payment transaction with recognized means;
- low costs of the service (about 1.50 euro/year).

In other words, the invention guarantees a plurality of technical advantages with respect to the prior art.

In particular, the technical effects achieved by the invention should be considered as "further technical effects" considering the fact that the invention realizes a sequence of steps/operative modules that are realizable in practical and technical terms and that offer a plurality of practical functions.

Moreover, the invention comprises the generation of data derived from the processing of primary data representing specific technical characteristics, including as one example, encoding technically identifiable means of identification. Such processing provides consistent and significant results, including the identification of a subject or the activation of access to a personal data area following identification.

The invention proves to be efficiently useable to provide results even in less time compared to the prior art.

The technical effects/advantages cited and other technical effects/advantages of the invention will emerge in further detail from the description provided herein below of an example embodiment and they are provided by way of approximate and non-limiting example with reference to the attached drawings.

### BRIEF DESCRIPTION OF THE DRAWINGS

Figure 1 is a schematic functional block diagram of the system/method of the invention.
Figure 2 is a schematic functional block diagram of an online service that uses the method of the invention.

### DETAILED DESCRIPTION

The invention provides for guaranteeing the certainty of an online identification of a subject at various levels.

In particular, a combination of the processing of images and information is provided, combining technology, conventional aspects and new logics for identifying a subject online.

The invention comprises a method for online univocal identification and a corresponding system for online univocal identification.

The invention comprises creating a profile PS for the subject S.

In other words, for online univocal identification of a subject S, the invention comprises a registration step for registering on a specific online identification platform configured to interact with the subject S in order to carry out all the steps needed to guarantee certain univocal identification. The system of the invention thus comprises an online identification platform 10.

The registration step comprises providing identity data D for the subject S, said identity data D comprising at least personal data Dan and a mobile phone number Dc.

Preferably, these identity data D further comprise a valid electronic mail address Em.

Preferably, the personal data Dan are entered manually by the subject S in the identification platform 10.

Preferably, the identity data D are entered by means of a smartphone, a tablet PC or a PC.

In general, it should be noted that in the present context and in the claims herein below, the online identification platform 10 is to be understood as a processing unit subdivided into distinct functional modules (memory modules or operating modules) for the sole purpose of describing the functions thereof clearly and thoroughly.

This online identification platform 10 can be constituted by a single electronic device, suitably programmed for performing the functions described, and the various modules can correspond to hardware entities and/or routine software that are part of the programmed device. Alternatively or additionally, these functions can be performed by a plurality of electronic devices in which the above-mentioned functional modules can be distributed.

The online identification platform 10 can also make use of one or more processors for execution of the instructions contained in the memory modules.

The above-mentioned functional modules can also be distributed in different computers, locally or remotely, based on the architecture of the network in which they reside.

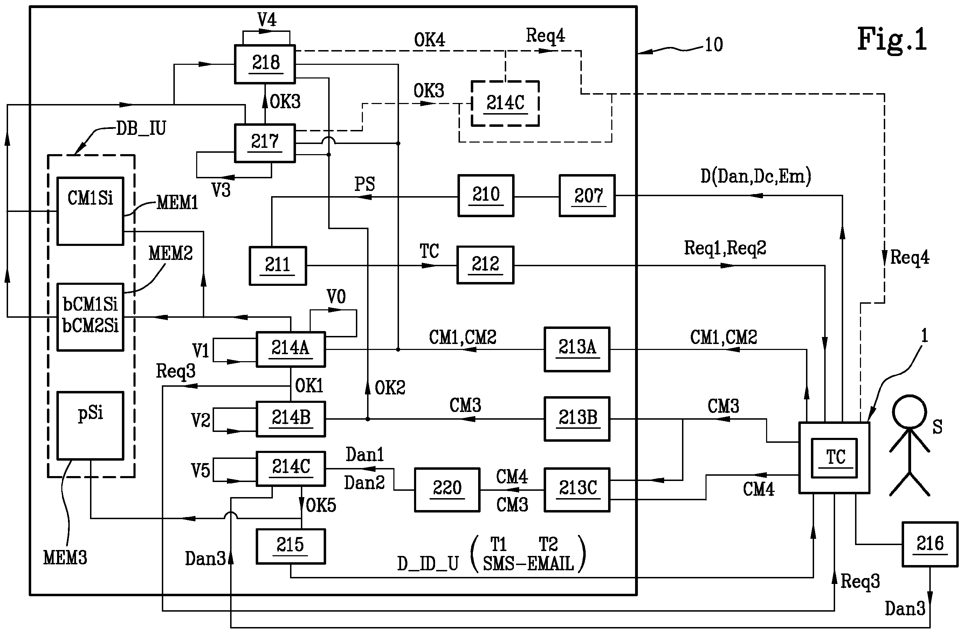

With reference to Figure 1, the online identification platform 10 comprises a receiving module 207 configured to receive the identity data D for the subject S, wherein the identity data D comprise at least the personal data Dan, a mobile phone number Dc of the subject S and preferably a valid electronic mail address Em.

The registration step further comprises creating a profile PS for the subject S as a function of the processed identity data D.

Specifically, the invention comprises storing the mobile phone number Dc of the subject S and combining the personal data extracts Dan with the mobile phone number Dc.

The online identification platform 10 further comprises a first calculation module 210 configured to create a profile PS for the subject S by means of the combination of the subject's personal data Dan with the mobile phone number Dc stored in the memory.

Once the registration step for registering the subject S has been completed, the invention comprises activating a procedure for online univocal identification as a function of the created profile PS.

The online univocal identification procedure comprises identifying at least one electronic device 1 equipped with a video camera TC, as a function of the created profile PS.

The electronic device 1 preferably comprises one of the following: a smartphone, a tablet PC, a PC or similar devices.

Additionally, a geolocation step for geolocating the identified electronic device TC is preferably comprised.

In other words, it is possible to select a limited area within which the electronic device 1 can be found in order to be able to use a service that is accessible via a login, upon prior completion of the online univocal identification procedure of the invention. In one particular case, the area can be represented by the geographical state of residence.

With reference to Figure 1, the online identification platform 10 comprises a first processing module 211 configured to identify an electronic device 1, equipped with a video camera TC, as a function of the profile PS created. Preferably, up to 4-5 devices can be defined as a function of the created profile PS, from which, following univocal identification, a subject S shall be able to access services available online for identified subjects, possibly by means of a pin generated by the system.

Preferably, the first processing module 211 is further configured to geolocate the identified electronic device 1 having a video camera TC.

The invention further comprises executing the step of sending to the electronic device 1 having a video camera TC at least two requests Req1, Req2 for two different multimedia contents CM1, CM2 representing the subject S.

With reference to Figure 1, the online identification platform 10 comprises a module 212 configured to send to the electronic device 1 having a video camera TC the at least two requests Req1, Req2 for two different multimedia contents CM1, CM2 representing the subject S.

In a first embodiment, the method and the system are provided to send a first request Req1 for a first multimedia content CM1 comprising a photograph of the subject S, taken in real time by means of the video camera TC, particularly a first photograph of the aesthetic appearance of said subject S in a first pose P0.

In addition, the method and the system are provided to send a second request Req2 for a second multimedia content CM2 comprising a photograph of the subject S, taken in real time by means of the video camera TC, in a second pose Pi differing from the first pose P0.

The technical effect achieved consists in the secure identification of the subject, given that the method and the system prevent a photograph from being used as an identifier of an individual when the individual is not actually present.

For example, the invention comprises that the subject S is first requested to send a photograph of him/herself in a first pose P0, for example as in an identity document, and immediately afterwards to send a photograph in a second pose P1, said second pose P1 including a specific gesture, or a smile, or showing both eyes shut, or some other feature.

Advantageously, according to the invention, the online identification platform 10 is configured to generate requests for random facial expressions.

The technical effect achieved consists in the impossibility of identity theft, because a possible identity thief cannot be aware of the requested random expression a priori and the requested random expression cannot be produced by anyone other than the subject S.

The system of the invention does not require the user to take any photographs. It is the system itself that takes the photograph if it recognizes the presence of the face and of the requested interaction. The same criterion is applied to the photographs of the documents that the system recognizes on its own and whereby it takes a photograph on its own.

In one variant of this first embodiment, the multimedia contents CM1, CM2 comprise films of the subject S during different movements Mi. In particular, the multimedia contents are loaded from the identification platform.

The invention comprises receiving in real time the at least two multimedia contents CM1, CM2 requested and generated as a function of the first pose P0 and of the second pose Pi.

In general, it is envisaged that the online identification platform 10 receives in real time from the subject S the multimedia contents CM1, CM2 representing the subject S and generated as a function of the first pose P0 and the second pose Pi, and wherein the multimedia contents CM1, CM2 are produced in real time by the video camera TC in the device 1.

In other words, with reference to Figure 1, the online identification platform 10 comprises a first receiving module 213A configured to receive in real time the at least two multimedia contents CM1,CM2 requested and generated as a function of the first pose P0 and of the second pose Pi.

In yet other words, according to the invention, direct interaction is established between the subject S and the online identification platform. The invention comprises that once the multimedia files have been received, correspondence is verified in the multimedia contents CM1, CM2 received and which represent the subject S.

In other words, with reference to Figure 1, the second processing unit comprises a first verification module 214A configured to verify correspondence in the multimedia contents CM1, CM2 received and which represent the subject S.

The verification of correspondence complies with several criteria associated with a first verification of correspondence step V0 and a second verification of correspondence step V1.

According to the invention, the verification of correspondence comprises the first verification step V0 which comprises carrying out a "face recognition" algorithm in the multimedia content CM1.

In particular, the face recognition algorithm recognizes the face of a person in the received multimedia content CM1 Si (Multimedia Content 1 of the i-th subject S) and stores the recognized image in a specific image memory MEM1 for any subsequent comparisons with other images of the same subject or of other subjects.

The first verification module 214a is thus configured to send to the recognized image CM1i to an image memory MEM1.

According to the invention, the verification of correspondence comprises the second verification of correspondence step V1 which comprises carrying out a univocity comparison of the multimedia contents CM1, CM2. The univocity comparison is preferably a biometric comparison.

In particular, the software for the biometric comparison stores in a specific biometric data memory MEM2 the biometric data bCMS1i, bCMS2i (biometric data in the Multimedia Content 1 or 2 of the i-th subject S) for the subject S referring to the two multimedia contents CM1 and CM2 for any subsequent comparisons with other images of the same subject or of other subjects.

In particular, a biometric algorithm compares the data that can be obtained from the photographs, for example as a function of ratios of distances between anatomical parts of the face.

Under imperfect lighting conditions, the biometric system may not be effective. One will proceed with manual verification with an operator only in the case of doubt or percentages of deviation that are questionable.

The first verification module 214a is configured to send the biometric data to a biometric data memory MEM2.

The invention comprises a database of subjects S who have been univocally identified DB_IU and which also comprises the image memory MEM1 and the biometric data memory MEM2.

The technical effect achieved consists in the generation of data for already identified subjects and which can be used by external third-party services. The invention comprises that in the case of a positive outcome OK1 of the first verification of correspondence V0 and of the second verification of correspondence V1, a step of sending to the electronic device 1 a third request Req3 for a third multimedia content CM3 is also performed, said third multimedia content CM3 comprising a photograph of an identification document of the subject S.

The first verification module 214a is configured to send the third request Req3 for the third multimedia content CM3 to the electronic device 1.

The identification document is preferably a valid identity document comprising a photograph.

In other words, with reference to Figure 1, the online identification platform 10 comprises a receiving module 213B configured to receive in real time the requested third multimedia content CM3.

The invention envisages that the verification of correspondence comprises a third verification of correspondence step V2 that comprises:
- receiving the third multimedia content CM3 from the electronic device 1;
- verifying correspondence between one of either the first or the second multimedia content CM1, CM2 and the third multimedia content CM3.

In other words, with reference to Figure 1, the online identification platform 10 comprises a second verification module 214B configured to verify correspondence between one of either the first or the second multimedia content CM1, CM2 and the third multimedia content CM3. Correspondence is preferably verified by means of a biometric comparison of the multimedia contents CM1, CM2 and CM3, in a particular case representing a photograph of the subject S in a first pose P0, a photograph of the subject S in a second pose Pi and a photograph of the subject taken from the identity card, respectively.

The invention comprises that in the case of a positive outcome OK2 of the first verification step V2, a first verification of univocity step V3 is also performed on the multimedia contents CM1, CM2, CM3, carrying out a univocity comparison between the detected multimedia contents CM1, CM2, CM3 of the subject and one or more data in the multimedia contents CM1Si, CM2Si, bCM1Si, bCM2Si, CM3Si (i=1...n) of generic subjects Si who have already been univocally identified.

In other words, to ensure univocity, the system of the invention must verify and cross-check at least the biometric data of all users in order to prevent situations in which a new subject who passes the verifications of correspondence may have already carried out an identification process and is thus attempting to obtain two identities, thereby violating the requirement of the invention based on univocal identification.

A first univocity module 217 is configured to perform the first verification of univocity V3 and to emit a signal OK3 in the case of successful verification.

The invention comprises that in the case of a positive outcome OK3 of the first verification of univocity V3, a second verification of univocity V4 is also performed on said multimedia contents CM1, CM2, CM3, carrying out a univocity comparison between the detected multimedia contents CM1, CM2, CM3 and at least some corresponding particular multimedia contents CM1Sj, CM2Sj, bCM1Sj, bCM2Sj, CM3Sj (j=1..n)) concerning famous people or public figures (Sj).

A second univocity module 218 is configured to perform the second verification of univocity V4 and to emit a signal OK4 in the case of successful verification.

These contents are extracted by means of verifications in public data bases such as Wikipedia or on social networks or on the web, where it is possible to find at least personal data and dates of birth.

According to the invention, the first verification of univocity V3 and the second verification of univocity V4 are carried out by means of a biometric comparison.

The invention comprises that in the case of a positive outcome OK3 of the first verification of univocity V3, or a positive outcome OK4 of the second verification of univocity, a step of sending a fourth request Req4 for verified personal data for the subject S to the electronic device 1 is performed.

The second univocity module 218 is configured to send to the electronic device 1 the fourth request Req4 for verified personal data for the subject S.

With reference to Figure 1, the online identification platform 10 comprises a receiving module 213C configured to receive in real time verified identification data Dan 1, Dan2 for the subject S.

In one embodiment, first verified identification data Dan 1 for the subject are obtained starting from a personal payment card photograph of the subject S which constitutes a fourth multimedia content CM4.

The personal payment card photograph preferably comprises a photograph of a credit or debit card.

The receiving module 213C is configured to send the multimedia content CM4 to a processing module 220 that is configured to perform a scan of, particularly OCR on, the personal payment card photograph of the subject S and to recognize part of the scan representing the first verified identification data Dan1 for the subject S.

Following recognition, the processing module 220 sends the first verified identification data Dan 1 for the subject S to a third verification module 214c in a text format.

In one embodiment, second verified identification data Dan2 for the subject are obtained starting from a photograph of an identification document of the subject S which has been indicated as the third multimedia content CM3.

According to the invention, the receiving module 213C is configured to receive the third multimedia content CM3 and to send it to the processing module 220 that is configured to perform a scan of, particularly OCR on, the identity document and to recognize part of the scan representing the second verified identification data Dan2 for the subject S.

Following recognition, the processing module 220 sends the second verified identification data Dan2 for the subject S to a third verification module 214c in a text format.

In one embodiment, the third verified identification data Dan3 for the subject are obtained starting from a payment via bank transfer or another form of payment that requires identification of the same subject S.

The invention comprises that the subject S can execute a payment via bank transfer or another form of payment that requires identification and verification of the same subject S.

It is known that banks have regulations for certifying the identity of a subject with absolute certainty

The device 1 is configured to send the payment data to a payment unit 216.

The invention comprises that the payment unit 216 executes the payment and sends the third verified identification data Dan3 for the subject S who is paying to the third verification module 214C in a text format.

Payment by means of a payment card takes place in conformity with the 3D Secure protocol which offers greater protection and secure authentication when purchases are made online. The invention comprises that the verification of correspondence comprises a fourth verification of correspondence step V5 comprising:
receiving the first verified identification data Dan 1 for the subject S from the processing module 220;
executing one of the following steps:
   - receiving the second verified identification data Dan2 for the subject S from the processing module 220;
      or
   - receiving the third verified identification data Dan3 for the subject S from the payment unit 216;
   - verifying correspondence between the first verified identification data Dan 1 and either the second verified identification data Dan 2 or the third verified identification data Dan 3.

The third verification module 214C is configured to perform the fourth verification of correspondence V5.

The invention comprises that in the case of a positive outcome OK5 of the fourth verification of correspondence step V5, a step of storing in a memory MEM3 the methods of payment pSi (payments of the generic subject Si) used by the generic subject Si and recognized is performed. The invention comprises that the database of univocally identified subjects DB_IU also comprises the memory MEM3 for the methods of payment. The technical effect achieved consists in the generation of data for already identified subjects and which can be used by external third-party services, said data also comprising data on authorized methods of payment.

The third verification module 214C is configured to send said payment methods to the memory MEM3 for the payment methods.

The invention comprises that in the case of a positive outcome OK5 of the fourth verification of correspondence V5, the step of generating univocal identification data D_ID_U for the univocally identified subject S is also performed.

Prior to the generation of univocal identification data D_ID_U for the univocally identified subject S, an operator checks to ensure that all the steps have been successfully performed.

In the case where non-conformity is detected, the steps of the univocal identification procedure shall be repeated partially or entirely.

In the case where conformity is detected, the invention further comprises that the step of sending to the electronic device 1 the univocal identification data D_ID_U is also carried out, said univocal identification data D_ID_U being useable by the subject S to access online services as an identified subject S.

In other words, with reference to Figure 1, the third verification module 214C is configured to:
receive the first verified identification data Dan 1 for the subject S from the processing module 220;
execute one of the following steps:
   - receiving the second verified identification data Dan 2 for the subject S from the processing module 220;
      or
   - receiving the third verified identification data Dan3 for the subject S from the payment unit 216;
verifying correspondence between the first verified identification data Dan 1 and either the second verified identification data Dan 2 or the third verified identification data Dan 3.

Preferably, the verification of correspondence is performed by means of a comparison between the identity data on the identity document (first verified identification data Dan 1) and the cardholder of the personal payment card (second identification data Dan2).

Preferably, the extraction of the identification data from the multimedia contents CM3, CM4 is carried out in the processing module 220 by means of a program for master data analysis Paa.

Preferably, the extraction of the verified identification data from the photographs is carried out by means of a program for master data analysis Paa.

This program preferably consists in automatic OCR software.

The invention comprises that in the case of correspondence, the univocal identification data D_ID_U are generated, said univocal identification data D_ID_U being useable by the subject S to access online services as an identified subject.

In other words, with reference to Figure 1, the identification module 215 is configured to generate univocal identification data D_ID_U that can be used by the subject S to access online services as an identified subject. Preferably, the univocal data D_ID_U are sent to the subject S via email. In particular, the identification module 215 is configured to send the univocal data D_ID_U to the subject S.

More specifically, in one preferred embodiment of the invention, the identification module 215 is configured to send the generated univocal data D_ID_U to the electronic device 1 as a function of the verifications V0, V1, V2, V3, V4, V5 that have been carried out with positive outcomes. In other words, the step of generating and sending the univocal data D_ID_U that can be used by the subject S to access online services as an identified subject S is performed in the case in which all correspondences V0, V1, V2, V3, V4, V5 have been verified, that is, in the case in which the verifications V0, V1, V2, V3, V4, V5 confirm the correspondences.

In particular, the univocal data ID_U comprise a first part T1 of a token T sent via SMS to the smartphone of the subject S and a second part T2 of a token T sent to the email address em of the subject S.

The cross-check verification conducted on the multimedia contents CM1, CM2, CM3 and CM4 ensures secure identification of the subject, cross-checked by means of graphical correspondence (first and second multimedia contents CM1, CM2 and second and third multimedia contents) and personal data correspondence (third and fourth multimedia contents CM3, CM4).

The electronic device TC, particularly a smartphone, executes the steps of:
receiving a first part T1 of the univocal data D_ID_U via SMS;
- receiving a second part T2 of the univocal data D_ID_U via electronic mail at the email address em;
- combining the first part T1 and the second part T2 of said univocal data D_ID_U to obtain a token T for access to online services.

In other words, the subject S can access specific online services by means of the token for recognition or by activating a user account of his/her own as a function of the token generated.

In one embodiment of the invention, the identification module 215 is configured to generate the univocal data D_ID_U that can be used by the subject S to access online services as a univocally identified subject as a function of at least three performed verifications of correspondence V0, V1, V2.

In a particular embodiment, the invention also comprises performing a cross-check with telephone providers between the telephone numbers of the device 1, particularly a smartphone, and the associated subjects S, so that there is certainty as regards the unique correspondence between the subject S and the device 1.

The univocal identification guaranteed by the invention permits access to different online services that require univocal identification of the subject requesting access.

The various online services Sol provided are part of a circuit that has approved and supports the sharing and univocal identification policies offered by the method of the invention.

In other words, the provider of the univocal identification system of the invention permits online third-party services to enter into an agreement for the use/sharing of identification data and/or payment procedures generated in the univocal identification system of the invention.

The sharing aspect concerns, particularly, but not limitedly, one or more of the data contained in the database DB_IU, that is, data concerning:
- the image memory MEM1;
- the biometric data memory MEM2;
- the memory MEM3 for the payment methods.

In particular, the invention is capable of interfacing with all online services that require univocal identification of a subject or the data concerning univocal identification that has already taken place for a subject and contained in the univocally identified identity database DB_IU.

In yet other words, the invention comprises realizing a tool for sharing the digital identity created, associating with one's own identity, one or more identity documents, one's own signature, and a payment system set up to accept payment methods relative to individuals and/or legal entities.

After completing the login procedure on an online website that offers a service, the subject can sign a contract or take out a subscription or simply pay for a service or a product with just one click after having authorized the passage of the documents or information requested by the provider of the service.

Moreover, the subject may also decide which personal data to authorize according to the type of service provided.

In particular, the service requested can also be the service provided by CERVED to associate the person with a legal entity and thus to operate with third parties for and on behalf of the business or entity. The invention makes it possible to univocally identify the subject requesting the service by means of access to the univocally identified identity database DB_IU.

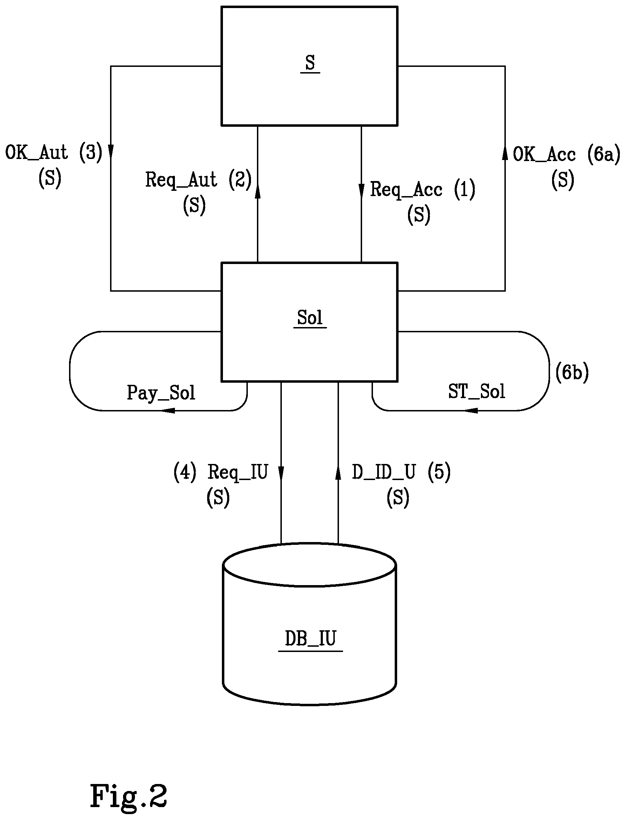

In more general terms, and referring particularly to Figure 2, the invention comprises that an online service Sol provided by third parties can be accessible to an identified subject S.

The service Sol receives a request for access Req_Acc from a subject S and as a result, it requests Req_Aut univocal identification from the subject S. The subject S authorizes OK_Aut the request, which is forwarded Req_IU by the service Sol to a database of univocally identified subjects DB_IU.As described hereinabove, the database DB_IU contains the univocal identifications associated with the subjects S who have been correctly identified by means of the procedure of the invention.

The database DB_IU returns the univocal identification data IU to the online service Sol.

In one embodiment, the online service Sol grants the subject S access OK_Acc to the online service Sol as a subject univocally identified by the univocal identification data IU.

In one embodiment, the online service Sol activates St_Sol the service Sol as a function of the univocal identification data IU.

In one embodiment, the online service Sol enables payment Pay_Sol for the service or product as a function of the univocal identification data IU by means of methods of payment pSi used by the generic subject Si and contained in a memory MEM3 of the database DB_IU, the payment being executable with just one click.

In particular, the invention enables the partner in the circuit (that is, the provider of the online service Sol) to directly receive the money authorized by the subject S through the subject's own acquirer on the bank account authorized to receive the money. The appointment of the provider of the system of the invention as proxy by the partner in the circuit is a prerequisite for this function.

The achieved technical effect is that the businesses providing the online services do not have to change or integrate any modifications in their payment process or in their processes for monitoring fiscal aspects.

In a preferred embodiment, the method for online univocal identification of the invention is implemented by means of a computer.

The invention also comprises a computer program which is configured, when running, to implement the steps of the method.

In a preferred embodiment, the method for providing an online service of the invention is implemented by means of a computer.

The invention also comprises a computer program which is configured, when running, to implement the steps of the method.

The invention, as disclosed herein, provides for guaranteeing the certainty of an online identification of a subject at various levels.

In particular, the invention achieves the following technical effects:
- efficient and secure online univocal identification of the subject without any possibility of fraud;
- simply achieved online identification;
- online identification that is flexible in use by the user;
- fast online identification (about 2 minutes);
- identity verification carried out also during the payment transaction;
- low costs of the service (about 1.50 euro/year).

## Claims

1. A computer implemented method for online univocal identification of a subject (S) comprising the steps of:
- creating a profile (PS) for said subject (S);
- activating a procedure for online univocal identification as a function of the created profile (PS), said procedure comprising the substep of identifying an electronic device (1) equipped with a video camera (TC) as a function of said created profile (PS);
- executing at least the following steps, via said procedure for online univocal identification:
transmitting to said electronic device (1) at least two requests (Req1, Req2, Req3, Req4) for at least two different multimedia contents (CM1, CM2, CM3) representing said subject (S);
receiving said at least two multimedia contents (CM1, CM2, CM3) in real time, as a function of said at least two requests (Req1, Req2, Req3), wherein the at least two multimedia contents have been realized by said video camera (TC);
performing first, second and third verifications of correspondence (V0, V1, V2) in at least one multimedia content among the multimedia contents (CM1, CM2, CM3) received in real time representing said subject (S);
wherein said step of verifying correspondence in the received multimedia contents (CM1, CM2) representing the subject (S) comprises a **first verification step (V0)** comprising the step of:
- carrying out a "face recognition" algorithm in a first multimedia content (CM1);
wherein said step of verifying correspondence in the received multimedia contents (CM1, CM2) representing the subject (S) comprises a **second verification step (V1)** comprising the step of:
- carrying out a univocity comparison between the multimedia contents (CM1, CM2);
wherein, in the case of a positive outcome (OK1) of the first verification (V0) and of the second verification (V1), the step of sending to said electronic device (1) **a third request (Req3)** for a third multimedia content (CM3) is also performed, said third multimedia content (CM3) comprising a photograph of an identification document of the subject (S);
wherein said step of verifying correspondence in the received multimedia contents (CM1, CM2) representing the subject (S) comprises a **a third verification step (V2)** comprising:
- receiving said third multimedia content (CM3);
- verifying correspondence between one of either the first or the second multimedia content (CM1, CM2) and said third multimedia content (CM3);
performing at least one verification of univocity (V3, V4) on said received multimedia contents (CM1, CM2, CM3);
wherein a first verification of univocity (V3) on said multimedia contents (CM1, CM2, CM3) is carrying out a univocity comparison between said detected multimedia contents (CM1, CM2, CM3) of the subject (S) and the multimedia content data (CM1Si, CM2Si, bCM1Si, bCM2Si, CM3Si (i=1...n)) of already univocally identified subjects (Si); in the case of a positive outcome (OK3) of the first verification of univocity (V3), further performing the step of sending to said electronic device (1) a fourth request (Req4) for a fourth content (CM4), comprising verified identification data (Dan1, Dan2, Dan3) for the subject (S);
performing a fourth verification of correspondence (V5) on said fourth content (CM4)
wherein said fourth verification of correspondence (V5) comprises a step of receiving the first verified identification data (Dan1) for the subject (S) to scan a personal payment card photograph of the subject (S) and to recognize part of the scan representing the first verified identification data (Dan1) for the subject (S);
said method further comprising
receiving the third verified identification data (Dan3) for the subject (S) from the payment unit (216), wherein said third verified identification data (Dan 3) for the subject are obtained starting from a payment via bank transfer or another form of payment that requires identification of the same subject (S);
said method further comprising the step of verifying correspondence between the first verified identification data (Dan 1) and the third verified identification data (Dan 3);
- in the case that the verifications (V0, V1, V2, V3, V4, V5) are satisfactory, generating univocal identification data (D_ID_U) for said univocally identified subject (S).

2. The method according to claim 1, comprising the step of sending said access identification data (D_ID_U) that are useable by said subject (S) to access online services as a univocally identified subject (S), in the case that the verifications (V0, V1, V2, V3, V4, V5) confirm the correspondences.

3. The method according to any one of the preceding claims, wherein said step of sending to said electronic device (1) comprises the step of sending a first request (Req1) for a first multimedia content (CM1) comprising a first photograph of the aesthetic appearance of said subject (S) in a first pose (P0).

4. The method according to any one of the preceding claims, wherein said step of sending to said electronic device (1) comprises the step of sending a second request (Req2) for a second multimedia content (CM2) comprising a photograph of the aesthetic appearance of said subject (S) in a second pose (Pi) differing from the first pose (P0).

5. The method according to claim 4, when dependent on claim 3, comprising the step of receiving in real time from said subject (S) multimedia contents (CM1, CM2) representing the subject (S) and generated as a function of said first pose (PC) and said second pose (Pi), respectively, and wherein said multimedia contents (CM1, CM2) are produced in real time by the video camera (TC) in the device (1).

6. The method according to anyone of the preceding claims, wherein said univocity comparison is a biometric comparison.

7. The method according to anyone of the preceding claims, comprising the steps of:
scanning the personal payment card photograph of the subject (S) to recognize part of the scan representing the first verified identification data (Dan1) for the subject (S);
sending the first verified identification data (Dan 1) for the subject (S) in a text format.

8. The method according to claim 7, comprising one of the following steps:
• scanning the photograph of an identification document of the subject (S) to recognize part of the scan representing the second verified identification data (Dan2) for the subject (S);
sending the second verified identification data (Dan2) for the subject (S) in a text format;
• sending payment data to a payment unit (216) via the device (1);
executing the payment;
sending the third verified identification data (Dan3) for the subject (S) in a text format.

9. The method according to anyone of the preceding claims, wherein, in the case of a positive outcome (OK5) of the fourth verification of correspondence (V5), the step of generating said univocal identification data (D_ID_U) is also carried out for said univocally identified subject (S) and, preferably,
the step of sending to said electronic device (1) said univocal identification data (D_ID_U) that are useable by said subject (S) to access online services as a univocally identified subject (S).

10. A system for online univocal identification of a subject (S), comprising:
an online identification platform (10) comprising:
- a first calculation module (210) configured to create a profile (PS) for the subject (S);
- a first processing module (211) configured to identify an electronic device (1), equipped with a video camera (TC), as a function of the profile (PS) created;
- at least one module (212, 217, 218) configured to send to the electronic device (1) at least two requests (Req1, Req2; Req3, Req4) for at least two multimedia contents (CM1, CM2, CM3, CM4) representing the subject (S);
- a receiving module (213A, 213B, 213C) configured to receive in real time at least two required multimedia contents (CM1, CM2, CM3, CM4) as a function of the two requested (Req1, Req2; Req3, Req4), wherein the at least two multimedia contents have been realized by means of said video camera (TC);
- a first and a second verification module (214A, 214B) configured to verify first, second and third (V0, V1, V2) correspondences in at least one multimedia content among the multimedia contents (CM1, CM2, CM3) received in real time representing the subject (S);
wherein said verifying correspondence in the received multimedia contents (CM1, CM2) representing the subject (S) comprises a **first verification step (V0)** comprising the step of:
- carrying out a "face recognition" algorithm in a first multimedia content (CM1);
wherein said verifying correspondence in the received multimedia contents (CM1, CM2) representing the subject (S) comprises a **second verification step (V1)** comprising the step of:
- carrying out a univocity comparison between the multimedia contents (CM1, CM2);
wherein, in the case of a positive outcome (OK1) of the first verification (V0) and of the second verification (V1), the sending to said electronic device (1) **a third request (Req3)** for a third multimedia content (CM3) is also performed, said third multimedia content (CM3) comprising a photograph of an identification document of the subject (S);
wherein said verifying correspondence in the received multimedia contents (CM1, CM2) representing the subject (S) comprises a a **third verification step (V2)** comprising:
- receiving said third multimedia content (CM3);
- verifying correspondence between one of either the first or the second multimedia content (CM1, CM2) and said third multimedia content (CM3);
at least one univocity module (217, 218) configured to perform at least one verification of univocity (V3, V4) on said received multimedia contents (CM1, CM2, CM3);
wherein
a first univocity module (217) configured to perform a first verification of univocity (V3) on said multimedia contents (CM1, CM2, CM3) by carrying out a univocity comparison between said detected multimedia contents (CM1, CM2, CM3) of the subject (S) and multimedia content data (CM1Si, CM2Si, bCM1Si, bCM2Si, CM3Si (i=1...n)) of already univocally identified subjects (Si);
a second univocity module (218), which is configured to perform, in the case of a positive outcome (OK3) of the first verification of univocity (V3), also the step of sending to said electronic device (1) a fourth request (Req4) for a fourth content (CM4) comprising verified identification data (Dan1, Dan2, Dan3) for the subject (S);
- a third verification module (214C) configured to perform a fourth verification (V5) of correspondence on a fourth content (CM4) comprising verified identification data (Dan1, Dan2, Dan3) for the subject (S);
- a processing module (220) configured to scan a personal payment card photograph of the subject (S) and to recognize part of said scan representing first verified identification data (Dan1) for the subject (S) received in said fourth verification of correspondence (V5);
said verification module (214c) being further configured to:
receive the third verified identification data (Dan3) for the subject (S) from a payment unit (216), wherein said third verified identification data (Dan3) for the subject are obtained starting from a payment via bank transfer or another form of payment that requires identification of the same subject (S);
and
verify correspondence between the first verified identification data (Dan 1) and the third verified identification data (Dan 3);
- an identification module (215) configured to generate univocal identification data (D_ID_U) for said univocally identified subject (s) in case that the verifications (V0, V1, V2, V3, V4, V5) are satisfactory.

11. The system according to claim 10, wherein said identification module (215) is configured to send said univocal identification data (D_ID_U) that are useable by said subject (S) to access online services as a univocally identified subject (S) in the case that the verifications (V0, V1, V2, V3, V4, V5) confirm the correspondences,
wherein the system comprises the electronic device, (1) configured to receive said univocal identification data (D_ID_U) for access to online services as a univocally identified subject (S).

12. Computer program configured, when in execution on a computer, to implement one or more steps of the method of claims 1 to 9.

## Patentansprüche

1. Computerimplementiertes Verfahren zur eindeutigen Online-Identifizierung eines Subjekts (S), umfassend die folgenden Schritte:
- Erstellen eines Profils (PS) für das Subjekt (S);
- Aktivieren einer Prozedur zur eindeutigen Online-Identifizierung als Funktion des erstellten Profils (PS), wobei die Prozedur den Teilschritt zum Identifizieren einer mit einer Videokamera (TC) ausgestatteten elektronischen Vorrichtung (1) als Funktion des erstellten Profils (PS) umfasst;
- Ausführen mindestens der folgenden Schritte über die Prozedur zur eindeutigen Online-Identifizierung:
Übertragen von mindestens zwei Anforderungen (Reql, Req2, Req3, Req4) für mindestens zwei verschiedene Multimediainhalte (CM1, CM2, CM3), die das Subjekt (S) darstellen, an die elektronische Vorrichtung (1);
Empfangen der mindestens zwei Multimediainhalte (CM1, CM2, CM3) in Echtzeit als Funktion der mindestens zwei Anforderungen (Reql, Req2, Req3), wobei die mindestens zwei Multimediainhalte durch die Videokamera (TC) realisiert worden sind;
Durchführen von ersten, zweiten und dritten Übereinstimmungsverifizierungen (V0, V1, V2) in mindestens einem Multimediainhalt unter den Multimediainhalten (CM1, CM2, CM3), die in Echtzeit empfangen wurden und das Subjekt (S) darstellen;
wobei der Schritt zum Verifizieren der Übereinstimmung in den empfangenen Multimediainhalten (CM1, CM2), die das Subjekt (S) darstellen, einen ersten Verifizierungsschritt (V0) umfasst, der den folgenden Schritt umfasst:
- Ausführen eines "Gesichtserkennungs" -Algorithmus in einem ersten Multimediainhalt (CM1);
wobei der Schritt zum Verifizieren der Übereinstimmung in den empfangenen Multimediainhalten (CM1, CM2), die das Subjekt (S) darstellen, einen zweiten Verifizierungsschritt (V1) umfasst, der den folgenden Schritt umfasst:
- Ausführen eines Eindeutigkeitsvergleichs unter den Multimediainhalten (CM1, CM2);
wobei im Falle eines positiven Ergebnisses (OK1) der ersten Verifizierung (V0) und der zweiten Verifizierung (V1) der Schritt zum Senden einer dritten Anforderung (Req3) für einen dritten Multimediainhalt (CM3) an die elektronische Vorrichtung (1) ebenfalls durchgeführt wird, wobei der dritte Multimediainhalt (CM3) ein Photo eines Ausweisdokuments des Subjekts (S) umfasst;
wobei der Schritt zum Verifizieren der Übereinstimmung in den empfangenen Multimediainhalten (CM1, CM2), die das Subjekt (S) darstellen, einen dritten Verifizierungsschritt (V2) umfasst, der Folgendes umfasst:
- Empfangen des dritten Multimediainhalts (CM3);
- Verifizieren der Übereinstimmung zwischen entweder dem ersten oder dem zweiten Multimediainhalt (CM1, CM2) und dem dritten Multimediainhalt (CM3);
Durchführen mindestens einer Eindeutigkeitsverifizierung (V3, V4) an den empfangenen Multimediainhalten (CM1, CM2, CM3);
wobei eine erste Eindeutigkeitsverifizierung (V3) an den Multimediainhalten (CM1, CM2, CM3) einen Eindeutigkeitsvergleich zwischen den erfassten Multimediainhalten (CM1, CM2, CM3) des Subjekts (S) und den Multimediainhaltsdaten (CM1Si, CM2Si, bCM1Si, bCM2Si, CM3Si (1=1 ...n)) von bereits eindeutig identifizierten Subjekten (Si) ausführt;
im Falle eines positiven Ergebnisses (OK3) der ersten Eindeutigkeitsverifizierung (V3), ferner Durchführen des Schritts zum Senden einer vierten Anforderung (Req4) für einen vierten Inhalt (CM4), umfassend verifizierte Identifizierungsdaten (Dan1, Dan2, Dan3) für das Subjekt (S) an die elektronische Vorrichtung (1);
Durchführen einer vierten Übereinstimmungsverifizierung (V5) an dem vierten Inhalt (CM4),
wobei die vierte Übereinstimmungsverifizierung (V5) einen Schritt zum Empfangen der ersten verifizierten Identifizierungsdaten (Dan1) für das Subjekt (S) umfasst, um ein persönliches Zahlungskartenfoto des Subjekts (S) zu scannen und einen Teil des Scans zu erkennen, der die ersten verifizierten Identifizierungsdaten (Dan1) für das Subjekt (S) darstellt;
wobei das Verfahren ferner das Empfangen der dritten verifizierten Identifizierungsdaten (Dan3) für das Subjekt (S) von der Zahlungseinheit (216) umfasst, wobei die dritten verifizierten Identifizierungsdaten (Dan 3) für das Subjekt ausgehend von einer Zahlung per Banküberweisung oder einer anderen Zahlungsart, die eine Identifizierung desselben Subjekts (S) erfordert, erhalten werden;
wobei das Verfahren ferner den Schritt zum Verifizieren der Übereinstimmung zwischen den ersten verifizierten Identifizierungsdaten (Dan 1) und den dritten verifizierten Identifizierungsdaten (Dan 3) umfasst;
- für den Fall, dass die Verifizierungen (V0, V1, V2, V3, V4, V5) zufriedenstellend sind, Generieren eindeutiger Identifizierungsdaten (D_ID_U) für das eindeutig identifizierte Subjekt (S).

2. Verfahren nach Anspruch 1, umfassend den Schritt zum Senden der Zugriffsidentifizierungsdaten (D_ID_U), die von dem Subjekt (S) verwendet werden können, um auf Online-Dienste als ein eindeutig identifiziertes Subjekt (S) zuzugreifen, für den Fall, dass die Verifizierungen (V0, V1, V2, V3, V4, V5) die Übereinstimmungen bestätigen.

3. Verfahren nach einem der vorhergehenden Ansprüche, wobei der Schritt zum Senden an die elektronische Vorrichtung (1) den Schritt zum Senden einer ersten Anforderung (Req1) für einen ersten Multimediainhalt (CM1) umfasst, der ein erstes Photo des ästhetischen Erscheinungsbilds des Subjekts (S) in einer ersten Pose (P0) umfasst.

4. Verfahren nach einem der vorhergehenden Ansprüche, wobei der Schritt zum Senden an die elektronische Vorrichtung (1) den Schritt zum Senden einer zweiten Anforderung (Req2) für einen zweiten Multimediainhalt (CM2) umfasst, der ein Photo des ästhetischen Erscheinungsbilds des Subjekts (S) in einer zweiten Pose (Pi) umfasst, die sich von der ersten Pose (P0) unterscheidet.

5. Verfahren nach Anspruch 4, wenn abhängig von Anspruch 3, umfassend den Schritt zum Empfangen von Multimediainhalten (CM1, CM2), die das Subjekt (S) darstellen und als Funktion jeweils der ersten Pose (P0) und der zweiten Pose (Pi) generiert werden, in Echtzeit von dem Subjekt (S), und wobei die Multimediainhalte (CM1, CM2) in Echtzeit von der Videokamera (TC) in der Vorrichtung (1) erzeugt werden.

6. Verfahren nach einem der vorhergehenden Ansprüche, wobei der Eindeutigkeitsvergleich ein biometrischer Vergleich ist.

7. Verfahren nach einem der vorhergehenden Ansprüche, umfassend die Schritte zum:
Scannen des persönlichen Zahlungskartenfotos des Subjekts (S), um einen Teil des Scans zu erkennen, der die ersten verifizierten Identifizierungsdaten (Dan1) für das Subjekt (S) darstellt;
Senden der ersten verifizierten Identifizierungsdaten (Dan 1) für das Subjekt (S) in einem Textformat.

8. Verfahren nach Anspruch 7, umfassend einen der folgenden Schritte:
• Scannen des Photos eines Ausweisdokuments des Subjekts (S), um einen Teil des Scans zu erkennen, der die zweiten verifizierten Identifizierungsdaten (Dan2) für das Subjekt (S) darstellt;
Senden der zweiten verifizierten Identifizierungsdaten (Dan2) für das Subjekt (S) in einem Textformat;
• Senden von Zahlungsdaten an eine Zahlungseinheit (216) über die Vorrichtung (1);
Ausführen der Zahlung;
Senden der dritten verifizierten Identifizierungsdaten (Dan3) für das Subjekt (S) in einem Textformat.

9. Verfahren nach einem der vorhergehenden Ansprüche, wobei im Falle eines positiven Ergebnisses (OK5) der vierten Übereinstimmungsverifizierung (V5) der Schritt zum Generieren der eindeutigen Identifizierungsdaten (D_ID_U) auch für das eindeutig identifizierte Subjekt (S) ausgeführt wird, und vorzugsweise
der Schritt zum Senden der eindeutigen Identifizierungsdaten (D_ID_U), die von dem Subjekt (S) verwendet werden können, um auf Online-Dienste als ein eindeutig identifiziertes Subjekt (S) zuzugreifen, an die elektronische Vorrichtung (1).

10. System zur eindeutigen Online-Identifizierung eines Subjekts (S), umfassend:
eine Online-Identifizierungsplattform (10), umfassend:
- ein erstes Berechnungsmodul (210), das konfiguriert ist, um ein Profil (PS) für das Subjekt (S) zu erstellen;
- ein erstes Verarbeitungsmodul (211), das konfiguriert ist, um eine elektronische Vorrichtung (1), die mit einer Videokamera (TC) ausgestattet ist, als Funktion des erstellten Profils (PS) zu identifizieren;
- mindestens ein Modul (212, 217, 218), das konfiguriert ist, um mindestens zwei Anforderungen (Reql, Req2; Req3, Req4) für mindestens zwei Multimediainhalte (CM1, CM2, CM3, CM4), die das Subjekt (S) darstellen, an die elektronische Vorrichtung (1) zu senden;
- ein Empfangsmodul (213A, 213B, 213C), das konfiguriert ist, um in Echtzeit mindestens zwei erforderliche Multimediainhalte (CM1, CM2, CM3, CM4) als Funktion der zwei Anforderungen (Reql, Req2; Req3, Req4) zu empfangen, wobei die mindestens zwei Multimediainhalte durch die Videokamera (TC) realisiert worden sind;
- ein erstes und ein zweites Verifizierungsmodul (214A, 214B), die konfiguriert sind, um erste, zweite und dritte (V0, V1, V2) Übereinstimmungen in mindestens einem Multimediainhalt unter den Multimediainhalten (CM1, CM2, CM3) zu verifizieren, die in Echtzeit empfangen werden und das Subjekt (S) darstellen;
wobei das Verifizieren der Übereinstimmung in den empfangenen Multimediainhalten (CM1, CM2), die das Subjekt (S) darstellen, einen ersten Verifizierungsschritt (V0) umfasst, der den folgenden Schritt umfasst:
- Ausführen eines "Gesichtserkennungs" -Algorithmus in einem ersten Multimediainhalt (CM1);
wobei das Verifizieren der Übereinstimmung in den empfangenen Multimediainhalten (CM1, CM2), die das Subjekt (S) darstellen, einen zweiten Verifizierungsschritt (V1) umfasst, der den folgenden Schritt umfasst:
- Ausführen eines Eindeutigkeitsvergleichs unter den Multimediainhalten (CM1, CM2);
wobei im Falle eines positiven Ergebnisses (OK1) der ersten Verifizierung (V0) und der zweiten Verifizierung (V1) das Senden einer dritten Anforderung (Req3) für einen dritten Multimediainhalt (CM3) an die elektronische Vorrichtung (1) ebenfalls durchgeführt wird, wobei der dritte Multimediainhalt (CM3) ein Photo eines Ausweisdokuments des Subjekts (S) umfasst;
wobei das Verifizieren der Übereinstimmung in den empfangenen Multimediainhalten (CM1, CM2), die das Subjekt (S) darstellen, einen dritten Verifizierungsschritt (V2) umfasst, der Folgendes umfasst:
- Empfangen des dritten Multimediainhalts (CM3);
- Verifizieren der Übereinstimmung zwischen entweder dem ersten oder dem zweiten Multimediainhalt (CM1, CM2) und dem dritten Multimediainhalt (CM3);
mindestens ein Eindeutigkeitsmodul (217, 218), das dazu konfiguriert ist, mindestens eine Eindeutigkeitsverifizierung (V3, V4) an den empfangenen Multimediainhalten (CM1, CM2, CM3) durchzuführen;
wobei
ein erstes Eindeutigkeitsmodul (217) konfiguriert ist, um eine erste Eindeutigkeitsverifizierung (V3) an den Multimediainhalten (CM1, CM2, CM3) durchzuführen, indem ein Eindeutigkeitsvergleich zwischen den erfassten Multimediainhalten (CM1, CM2, CM3) des Subjekts (S) und Multimediainhaltsdaten (CM1Si, CM2Si, bCM1Si, bCM2Si, CM3Si (i=1 ...n)) von bereits eindeutig identifizierten Subjekten (Si) ausgeführt wird;
ein zweites Eindeutigkeitsmodul (218), das konfiguriert ist, um im Falle eines positiven Ergebnisses (OK3) der ersten Eindeutigkeitsverifizierung (V3) auch den Schritt zum Senden einer vierten Anforderung (Req4) für einen vierten Inhalt (CM4), umfassend verifizierte Identifizierungsdaten (Dan1, Dan2, DAN3), für das Subjekt (S) an die elektronische Vorrichtung (1) durchzuführen;
- ein drittes Verifizierungsmodul (214C), das dazu konfiguriert ist, eine vierte Verifizierung (V5) der Übereinstimmung an einem vierten Inhalt (CM4) durchzuführen, umfassend verifizierte Identifizierungsdaten (Dan1, Dan2, Dan3) für das Subjekt (S) ;
- ein Verarbeitungsmodul (220), das konfiguriert ist, um ein persönliches Zahlungskartenfoto des Subjekts (S) zu scannen und einen Teil des Scans zu erkennen, der erste verifizierte Identifizierungsdaten (Dan1) für das Subjekt (S) darstellt, die in der vierten Übereinstimmungsverifizierung (V5) empfangen wurden;
wobei das Verifizierungsmodul (214c) ferner konfiguriert ist, zum:
Empfangen der dritten verifizierten Identifizierungsdaten (Dan3) für das Subjekt (S) von einer Zahlungseinheit (216), wobei die dritten verifizierten Identifizierungsdaten (Dan3) für das Subjekt ausgehend von einer Zahlung per Banküberweisung oder einer anderen Zahlungsart, die eine Identifizierung desselben Subjekts (S) erfordert, erhalten werden;
und
zum Verifizieren der Übereinstimmung zwischen den ersten verifizierten Identifizierungsdaten (Dan 1) und den dritten verifizierten Identifizierungsdaten (Dan 3);
- ein Identifizierungsmodul (215), das dazu konfiguriert ist, eindeutige Identifizierungsdaten (D_ID_U) für das eindeutig identifizierte Subjekt (s) zu generieren, falls die Verifizierungen (V0, V1, V2, V3, V4, V5) zufriedenstellend sind.

11. System nach Anspruch 10, wobei das Identifizierungsmodul (215) konfiguriert ist, um die eindeutigen Identifizierungsdaten (D_ID_U) zu senden, die von dem Subjekt (S) verwendet werden können, um auf Online-Dienste als ein eindeutig identifiziertes Subjekt (S) zuzugreifen, falls die Verifizierungen (V0, V1, V2, V3, V4, V5) die Übereinstimmungen bestätigen,
wobei das System die elektronische Vorrichtung (1) umfasst, die konfiguriert ist, um die eindeutigen Identifizierungsdaten (D_ID_U) für den Zugriff auf Online-Dienste als ein eindeutig identifiziertes Subjekt (S) zu empfangen.

12. Computerprogramm, das konfiguriert ist, wenn es auf einem Computer ausgeführt wird, um einen oder mehrere Schritte des Verfahrens nach den Ansprüchen 1 bis 9 umzusetzen.

## Revendications

1. Procédé mis en œuvre par ordinateur pour l'identification univoque en ligne d'un sujet (S) comprenant les étapes de :
- créer un profil (PS) pour ledit sujet (S) ;
- activer une procédure d'identification univoque en ligne en fonction du profil (PS) créé, ladite procédure comprenant la sous-étape d'identification d'un appareil électronique (1) équipé d'une caméra vidéo (TC) en fonction dudit profil (PS) créé ;
- exécuter au moins les étapes suivantes, par l'intermédiaire de ladite procédure d'identification univoque en ligne :
transmettre audit appareil électronique (1) au moins deux demandes (Reql, Req2, Req3, Req4) pour au moins deux contenus multimédias différents (CM1, CM2, CM3) représentant ledit sujet (S) ;
recevoir lesdits au moins deux contenus multimédias (CM1, CM2, CM3) en temps réel, en fonction desdits au moins deux demandes (Reql, Req2, Req3), dans lequel les au moins deux contenus multimédias ont été réalisés par ladite caméra vidéo (TC) ;
effectuer une première, deuxième et troisième vérifications de correspondance (V0, V1, V2) dans au moins un contenu multimédia parmi les contenus multimédias (CM1, CM2, CM3) reçus en temps réel représentant ledit sujet (S) ;
dans lequel ladite étape de vérification de correspondance dans les contenus multimédias (CM1, CM2) reçus représentant le sujet (S) comprend une première étape de vérification (V0) comprenant l'étape de :
- exécuter un algorithme de « reconnaissance faciale » dans un premier contenu multimédia (CM1) ;
dans lequel ladite étape de vérification de correspondance dans les contenus multimédias (CM1, CM2) reçus représentant le sujet (S) comprend une deuxième étape de vérification (V1) comprenant l'étape de :
- effectuer une comparaison univoque entre les contenus multimédias (CM1, CM2) ;
dans lequel, en cas de résultat positif (OK1) de la première vérification (V0) et de la deuxième vérification (V1), l'étape consistant à envoyer audit appareil électronique (1) une troisième demande (Req3) pour un troisième contenu multimédia (CM3) est également effectuée, ledit troisième contenu multimédia (CM3) comprenant une photographie d'un document d'identification du sujet (S) ;
dans lequel ladite étape de vérification de correspondance dans les contenus multimédias (CM1, CM2) reçus représentant le sujet (S) comprend une troisième étape de vérification (V2) comprenant :
- recevoir ledit troisième contenu multimédia (CM3) ;
- vérifier la correspondance entre le premier ou le deuxième contenu multimédia (CM1, CM2) et ledit troisième contenu multimédia (CM3) ;
effectuer au moins une vérification de l'univocité (V3, V4) sur lesdits contenus multimédias (CM1, CM2, CM3) reçus ;
dans lequel une première vérification de l'univocité (V3) sur lesdits contenus multimédias (CM1, CM2, CM3) consiste à effectuer une comparaison d'univocité entre lesdits contenus multimédias (CM1, CM2, CM3) détectés du sujet (S) et les données de contenu multimédia (CM1Si, CM2Si, bCM1Si, bCM2Si, CM3Si (i=1 ...n)) des sujets (Si) déjà identifiés de manière univoque ;
en cas de résultat positif (OK3) de la première vérification de l'univocité (V3), effectuer de plus l'étape consistant à envoyer audit appareil électronique (1) une quatrième demande (Req4) pour un quatrième contenu (CM4), comprenant des données d'identification vérifiées (Dan1, Dan2, Dan3) du sujet (S) ;
effectuer une quatrième vérification de correspondance (V5) sur ledit quatrième contenu (CM4),
dans lequel ladite quatrième vérification de correspondance (V5) comprend une étape de réception des premières données d'identification vérifiées (Dan1) du sujet (S) pour numériser une photographie de carte de paiement personnelle du sujet (S) et pour reconnaître une partie de la numérisation représentant les premières données d'identification vérifiées (Dan1) du sujet (S) ; ledit procédé comprenant de plus : recevoir les troisièmes données d'identification vérifiées (Dan3) du sujet (S) de l'unité de paiement (216), dans lequel lesdites troisièmes données d'identification vérifiées (Dan 3) du sujet sont obtenues à partir d'un paiement par virement bancaire ou par une autre forme de paiement qui nécessite l'identification du même sujet (S) ; ledit procédé comprenant de plus l'étape consistant à vérifier la correspondance entre les premières données d'identification vérifiées (Dan 1) et les troisièmes données d'identification vérifiées (Dan 3) ;
- dans le cas où les vérifications (V0, V1, V2, V3, V4, V5) sont satisfaisantes, générer des données d'identification univoques (D_ID_U) pour ledit sujet (S) identifié de manière univoque.

2. Procédé selon la revendication 1, comprenant l'étape consistant à envoyer lesdites données d'identification d'accès (D_ID_U) étant utilisables par ledit sujet (S) pour accéder aux services en ligne en tant que sujet (S) identifié de manière univoque, dans le cas où les vérifications (V0, V1, V2, V3, V4, V5) confirment les correspondances.

3. Procédé selon l'une quelconque des revendications précédentes, dans lequel ladite étape d'envoi audit appareil électronique (1) comprend l'étape consistant à envoyer une première demande (Req1) à un premier contenu multimédia (CM1) comprenant une première photographie de l'apparence esthétique dudit sujet (S) dans une première pose (P0).

4. Procédé selon l'une quelconque des revendications précédentes, dans lequel ladite étape d'envoi audit appareil électronique (1) comprend l'étape consistant à envoyer une deuxième demande (Req2) à un deuxième contenu multimédia (CM2) comprenant une photographie de l'apparence esthétique dudit sujet (S) dans une deuxième pose (Pi) différant de la première pose (P0).

5. Procédé selon la revendication 4, lorsqu'elle dépend de la revendication 3, comprenant l'étape consistant à recevoir en temps réel dudit sujet (S) des contenus multimédias (CM1, CM2) représentant le sujet (S) et générés en fonction, respectivement, de ladite première pose (P0) et de ladite deuxième pose (Pi) et dans lequel lesdits contenus multimédias (CM1, CM2) sont produits en temps réel par la caméra vidéo (TC) dans l'appareil (1).

6. Procédé selon l'une quelconque des revendications précédentes, dans lequel ladite comparaison d'univocité est une comparaison biométrique.

7. Procédé selon l'une quelconque des revendications précédentes, comprenant les étapes de :
numériser la photographie de la carte de paiement personnelle du sujet (S) pour reconnaître la partie de la numérisation représentant les premières données d'identification vérifiées (Dan1) du sujet (S) ;
envoyer les premières données d'identification vérifiées (Dan 1) du sujet (S) dans un format texte.

8. Procédé selon la revendication 7, comprenant l'une des étapes suivantes :
• numériser la photographie d'un document d'identification du sujet (S) pour reconnaître la partie de la numérisation représentant les deuxièmes données d'identification vérifiées (Dan2) du sujet (S) ; envoyer les deuxièmes données d'identification vérifiées (Dan2) du sujet (S) dans un format texte ;
• envoyer les données de paiement à une unité de paiement (216) par l'intermédiaire de l'appareil (1) ;
exécuter le paiement ;
envoyer les troisième données d'identification vérifiées (Dan3) du sujet (S) dans un format texte.

9. Procédé selon l'une quelconque des revendications précédentes, dans lequel, dans le cas d'un résultat positif (OK5) de la quatrième vérification de correspondance (V5), l'étape consistant à générer lesdites données d'identification univoques (D_ID_U) est également effectuée pour ledit sujet (S) identifié de manière univoque et, de préférence,
l'étape d'envoi audit appareil électronique (1) desdites données d'identification univoques (D_ID_U) qui sont utilisables par ledit sujet (S) pour accéder à des services en ligne en tant qu'un sujet (S) identifié de manière univoque.

10. Système d'identification univoque en ligne d'un sujet (S), comprenant :
une plate-forme d'identification en ligne (10) comprenant :
- un premier module de calcul (210) configuré pour créer un profil (PS) du sujet (S) ;
- un premier module de traitement (211) configuré pour identifier un appareil électronique (1), équipé d'une caméra vidéo (TC), en fonction du profil (PS) créé ;
- au moins un module (212, 217, 218) configuré pour envoyer à l'appareil électronique (1) au moins deux demandes (Reql, Req2 ; Req3, Req4) pour au moins deux contenus multimédias (CM1, CM2, CM3, CM4) représentant le sujet (S) ;
- un module de réception (213A, 213B, 213C) configuré pour recevoir en temps réel au moins deux contenus multimédias (CM1, CM2, CM3, CM4) requis en fonction des deux demandes (Reql, Req2 ; Req3, Req4), dans lequel les au moins deux contenus multimédias ont été réalisés au moyen de ladite caméra vidéo (TC) ;
- un premier et un deuxième module de vérification (214A, 214B) configurés pour vérifier les première, deuxième et troisième correspondances (V0, V1, V2) dans au moins un contenu multimédia parmi les contenus multimédias (CM1, CM2, CM3) reçus en temps réel représentant le sujet (S) ;
dans lequel ladite vérification de correspondance dans les contenus multimédias (CM1, CM2) reçus représentant le sujet (S) comprend une première étape de vérification (V0) comprenant l'étape de :
- exécuter un algorithme de « reconnaissance faciale » dans un premier contenu multimédia (CM1) ;
dans lequel ladite vérification de correspondance dans les contenus multimédias (CM1, CM2) reçus représentant le sujet (S) comprend une deuxième étape de vérification (V1) comprenant l'étape de :
- effectuer une comparaison univoque entre les contenus multimédias (CM1, CM2) ;
dans lequel, en cas de résultat positif (OK1) de la première vérification (V0) et de la deuxième vérification (V1), l'envoi audit appareil électronique (1) d'une troisième demande (Req3) à un troisième contenu multimédia (CM3) est également effectué, ledit troisième contenu multimédia (CM3) comprenant une photographie d'un document d'identification du sujet (S) ;
dans lequel ladite vérification de correspondance dans les contenus multimédias (CM1, CM2) reçus représentant le sujet (S) comprend une troisième étape de vérification (V2) comprenant :
- recevoir ledit troisième contenu multimédia (CM3) ;
- vérifier la correspondance entre le premier ou le deuxième contenu multimédia (CM1, CM2) et ledit troisième contenu multimédia (CM3) ;
au moins un module d'univocité (217, 218) configuré pour effectuer au moins une vérification de l'univocité (V3, V4) sur lesdits contenus multimédias (CM1, CM2, CM3) reçus ;
dans lequel
un premier module d'univocité (217) est configuré pour effectuer une première vérification de l'univocité (V3) sur lesdits contenus multimédias (CM1, CM2, CM3) en effectuant une comparaison d'univocité entre lesdits contenus multimédias (CM1, CM2, CM3) détectés du sujet (S) et les données de contenu multimédia (CM1Si, CM2Si, bCM1Si, bCM2Si, CM3Si (i=1 ...n)) des sujets (Si) déjà identifiés de manière univoque ;
un deuxième module d'univocité (218), qui est configuré pour effectuer, en cas de résultat positif (OK3) de la première vérification de l'univocité (V3), aussi l'étape consistant à envoyer audit appareil électronique (1) une quatrième demande (Req4) pour un quatrième contenu (CM4), comprenant des données d'identification vérifiées (Dan1, Dan2, Dan3) du sujet (S) ;
- un troisième module de vérification (214C) configuré pour effectuer une quatrième vérification (V5) de correspondance sur un quatrième contenu (CM4) comprenant des données d'identification vérifiées (Dan1, Dan2, Dan3) du sujet (S) ;
- un module de traitement (220) configuré pour numériser une photographie de carte de paiement personnelle du sujet (S) et pour reconnaître une partie de ladite numérisation représentant les premières données d'identification vérifiées (Dan1) du sujet (S) reçues dans ladite quatrième vérification de correspondance (V5) ;
ledit module de vérification (214c) étant de plus configuré pour :
recevoir les troisièmes données d'identification vérifiées (Dan3) du sujet (S) à partir d'une unité de paiement (216), dans lequel lesdites troisièmes données d'identification vérifiées (Dan3) du sujet sont obtenues à partir d'un paiement par virement bancaire ou par une autre forme de paiement qui nécessite l'identification du même sujet (S) ;
et
vérifier la correspondance entre les premières données d'identification vérifiées (Dan 1) et les troisièmes données d'identification vérifiées (Dan 3) ;
- un module d'identification (215) configuré pour générer des données d'identification univoques (D_ID_U) dudit sujet (s) identifié de manière univoque si les vérifications (V0, V1, V2, V3, V4, V5) sont satisfaisantes.

11. Système selon la revendication 10, dans lequel ledit module d'identification (215) est configuré pour envoyer lesdites données d'identification univoques (D_ID_U) étant utilisables par ledit sujet (S) pour accéder aux services en ligne en tant que sujet (S) identifié de manière univoque dans le cas où les vérifications (V0, V1, V2, V3, V4, V5) confirment les correspondances, dans lequel le système comprend l'appareil électronique (1) configuré pour recevoir lesdites données d'identification univoques (D_ID_U) pour l'accès aux services en ligne en tant que sujet (S) identifié de manière univoque.

12. Programme informatique configuré, lors de son exécution sur un ordinateur, pour mettre en œuvre une ou plusieurs étapes du procédé des revendications 1 à 9.
